Europäisches Patentamt

European Patent Office

Office européen des brevets

(19)

(11) Veröffentlichungsnummer: **0 247 496 B1**

(12) **EUROPÄISCHE PATENTSCHRIFT**

(45) Veröffentlichungstag der Patentschrift: **28.08.91**

(51) Int. Cl.⁵: **E21B 17/08**, F16L 9/14, E02D 5/52, E21B 17/00

(21) Anmeldenummer: **87107250.0**

(22) Anmeldetag: **19.05.87**

(54) **Vortriebsrohr.**

(30) Priorität: **30.05.86 DE 3618334**

(43) Veröffentlichungstag der Anmeldung:
**02.12.87 Patentblatt 87/49**

(45) Bekanntmachung des Hinweises auf die Patenterteilung:
**28.08.91 Patentblatt 91/35**

(84) Benannte Vertragsstaaten:
**AT BE CH DE FR GB IT LI LU NL**

(56) Entgegenhaltungen:
**WO-A-81/03672**       **AT-B- 357 946**
**DD-C- 210 098**       **DE-A- 1 625 936**
**DE-B- 1 231 190**     **DE-B- 2 631 843**
**GB-A- 1 443 940**

(73) Patentinhaber: **Meyer & John GmbH & Co Tief-
und Rohrleitungsbau
Flagentwiet 17
W-2000 Hamburg 61(DE)**

(72) Erfinder: **John, Hans-Jürgen
Schliemannstrasse 5a
W-2000 Hamburg 52(DE)**

(74) Vertreter: **UEXKÜLL & STOLBERG Patentanwälte
Beselerstrasse 4
W-2000 Hamburg 52(DE)**

EP 0 247 496 B1

## Beschreibung

Die Erfindung bezieht sich auf ein Vortriebsrohr zur Verlegung im Boden mittels eines Preßverfahrens, mit einem aus Metall bestehenden inneren Rohrabschnitt und einem diesen umgebenden Ummantelungsabschnitt, wobei aufeinanderfolgende Vortriebsrohre zu einem Rohrstrang zusammenfügbar sind.

Derartige Vortriebsrohre sind bekannt, wobei der Ummantelungsabschnitt aus einem hochfesten Beton besteht, über den die zum Vorschub im Boden erforderlichen Kräfte auf die Teile der Preßvorrichtung übertragen werden, die vor dem Vortriebsrohr angeordnet sind und den Boden lösen, um den Vortrieb des Vortriebsrohres zu ermöglichen. Der aus Metall bestehende innere Rohrabschnitt dient im wesentlichen nur als innere "Beschichtung" des die Kräfte übertragenden Ummantelungsabschnittes, um auf diese Weise eine zuverlässige Abdichtung gegen Austritt von Flüssigkeit oder Gas durch den Ummantelungsabschnitt nach außen zu erreichen sowie die Druckfestigkeit zu erhöhen.

An sich lassen sich als Vortriebsrohre auch Metallrohre verwenden, doch ergeben sich dann immer wieder Schwierigkeiten, wenn diese Metallrohre nicht ohne Bildung von Vorsprüngen oder Absätzen zusammengesetzt werden. Vorhandene Vorsprünge oder Absätze am äußeren Umfang des aus mehreren Vortriebsrohren zusammengesetzten Rohrstranges behindern nämlich den Vorschub, weil sie in Eingriff mit dem benachbarten Erdreich kommen. Dies kann auch nicht dadurch vermieden werden, daß man mittels des zur Preßvorrichtung gehörenden Schürfkopfes das Erdreich mit größerem Durchmesser "aufbohrt" als an sich unter Berücksichtigung des maximalen Durchmessers des Rohrstranges erforderlich wäre. Dann bildet sich nämlich um den verlegten Rohrstrang ein Hohlraum, in den das Erdreich in einem Setzvorgang nachdringt, so daß an der Erdoberfläche Senkungen auftreten können.

Es ist auch bereits ein kombiniertes Rohr bekannt (AT-B-357 946), das aus einem inneren Futterrohr und einem äußeren, zu verlegenden Rohr besteht. Die ineinandergesteckten Rohre werden am vorderen Ende mit einem Schneidschuh und am hinteren Ende mit einer Druckplatte versehen, und das zu verlegende (äußere) Rohr wird unter Zwischenschaltung einer Distanzhülse zwischen der Druckplatte und dem Schneidschuh festgespannt. Die so gebildete Einheit wird im Boden vorgetrieben, wobei durch das Futterrohr eine geradlinige Führung sichergestellt und eine Beschädigung des Rohres durch Bohrklein verhindert werden soll, jedoch die Übertragung von Vorschubkräften sowohl über das (innere) Futterrohr als auch über das zu verlegende (äußere) Rohr erfolgt. Ist das vorbekannte Rohr im Boden verlegt, wird das (innere) Futterrohr herausgezogen, und lediglich das zu verlegende (äußere) Rohr verbleibt im Boden.

Bei dem vorbekannten kombinierten Rohr muß aber das im Boden verbleibende äußere Rohr einen geschlossenen, durchgehenden Bohrstrang bilden, und das zu entfernende innere Futterohr muß eine glatte äußere Oberfläche ohne Vorsprünge o.ä. aufweisen, um aus dem äußeren Rohr entfernt werden zu können.

Es ist Aufgabe der Erfindung, ein als ganzes im Boden verbleibendes Vortriebsrohr zu schaffen, das bei großer Druckfestigkeit einfach herstellbar ist und den beim Preßvorgang entstehenden Raum im Erdreich vollständig ausfüllt.

Zur Lösung dieser Aufgabe wird ein Vortriebsrohr der eingangs erwähnten Art erfindungsgemäß derart ausgestaltet, daß der innere Rohrabschnitt zur Übertragung der Vortriebskraft ausgebildet ist und aus einem duktilen Gußrohr mit an den Enden einander ergänzenden Teilen einer Verbindungsmuffe besteht und daß der Ummantelungsabschnitt im Abstand von zumindest einem Ende des inneren Rohrabschnittes endet, so daß sich Ummantelungsabschnitte benachbarter Vortriebsrohre innerhalb des Rohrstranges im Abstand voneinander befinden.

Das erfindungsgemäße Vortriebsrohr ist also, verglichen mit dem vorstehend beschriebenen, bekannten, vollständig im Boden verbleibenden Vortriebsrohr genau umgekehrt aufgebaut, indem der innere, aus duktilem Gußmaterial bestehende Rohrabschnitt zur Übertragung der Vortriebskraft dient, während der Ummantelungsabschnitt keinerlei Vortriebskräfte überträgt, weil er im Abstand von zumindest einem Ende des Vortriebsrohres endet, so daß beim Zusammenfügen mehrerer Vortriebsrohre zu einem Rohrstrang zwischen den Ummantelungsabschnitten benachbarter Vortriebsrohre ein Ringspalt vorhanden ist, d.h. die Ummantelungsabschnitte benachbarter Vortriebsrohre berühren sich nicht.

Der Ummantelungsabschnitt kann in seinen Durchmesser genau in Anpassung an die Abmessungen des in der Preßvorrichtung verwendeten Schürfkopfes ausgebildet sein, so daß das Vortriebsrohr die hergestellte Bohrung vollständig ausfüllt, also kein Erdreich in diese Bohrung nachsinken kann, wenn das Vortriebsrohr eingebracht ist. Ferner läßt sich eine vollständig glatte Außenfläche ohne Vorsprünge bilden, so daß trotz Verwendung von duktilen Gußrohren mit an ihren Enden vorhandenen, einander ergänzenden Teilen einer gegebenenfalls druckdichten Verbindungsmuffe eine vollständige Abdeckung bzw. Überdeckung dieser Verbindungsmuffenteile erreicht wird, wenn nur der äußere Durchmesser der Ummantelung entsprechend größer als der maximale Durchmesser der Verbindungsmuffenteile ausgebildet wird.

Auf diese Weise wird es zum ersten Mal möglich, duktile Gußrohre (Gußrohre, die durch eine besondere Gefügestruktur ihre Sprödigkeit verloren haben), wie sie als Standard-Produkte erhältlich sind, als Vortriebsrohre zur Verlegung im Boden mittels eines Preßverfahrens einzusetzen, was bisher wegen der vorspringenden Verbindungsmuffenteile nicht möglich war.

Der Ummantelungsabschnitt des erfindungsgemäßen Vortriebsrohres kann beispielsweise aus Beton bestehen, wobei dieser sehr geringe Festigkeit haben kann, weil sichergestellt ist, daß er nicht zur Übertragung von Vortriebskräften beiträgt.

Es ist auch möglich, den Ummantelungsabschnitt aus geschäumtem Kunststoff herzustellen, was insbesondere dann zweckmäßig ist, wenn eine Wärmeisolierwirkung erwünscht ist, etwa bei Fernwärmeleitungen.

Üblicherweise wird der Ummantelungsabschnitt mittels einer Schalung in Form eines zylindrischen Mantels hergestellt, der einen Ringraum um den inneren Rohrabschnitt bildend angeordnet wird, so daß das Material für den Ummantelungsabschnitt dann in diesen Ringraum eingebracht werden kann, um dort auszuhärten.

In einer Weiterbildung des erfindungsgemäßen Vortriebsrohres wird diese Schalung nicht entfernt, so daß der Ummantelungsabschnitt von dem zuvor als Schalung verwendeten Mantel umgeben bleibt.

Die Innenfläche des inneren Rohrabschnittes kann mit einer Korrosionsschutzschicht bedeckt sein oder der Rohrabschnitt kann aus korrosionsfestem Material bestehen.

Die Erfindung wird im folgenden anhand der schematisch Ausführungsbeispiele zeigenden Figuren näher erläutert.

Figur 1 zeigt im Schnitt ein Stück eines Rohrstranges aus Vortriebsrohren.

Figur 2 zeigt in einer Darstellung entsprechend Figur 1 Vortriebsrohre mit einem den Ummantelungsabschnitt umgebenden Mantel.

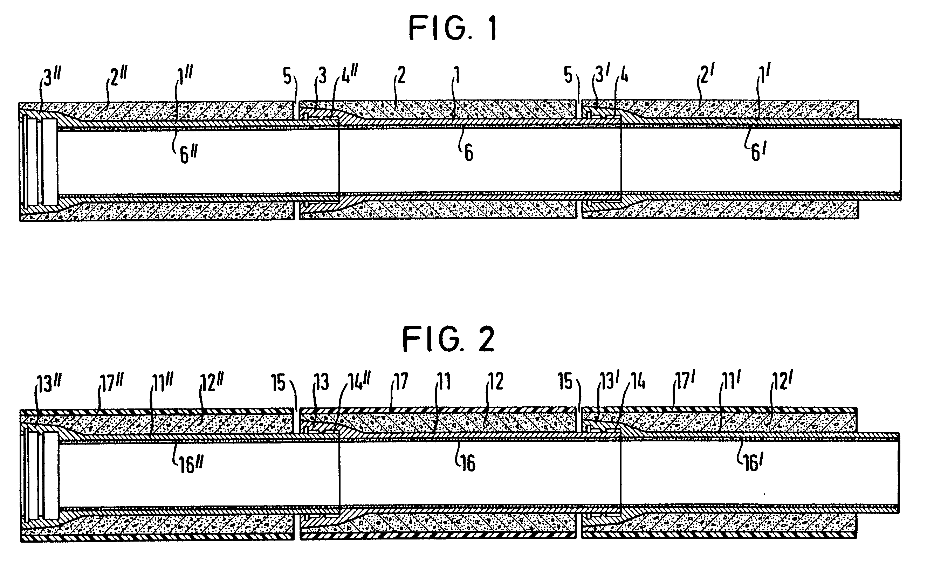

Der in Figur 1 dargestellte Abschnitt eines Rohrstranges besteht aus drei gleich aufgebauten Vortriebsrohren. Diese drei Vortriebsrohre sind mit gleichen Bezugszeichen bezeichnet, die sich lediglich durch die Zusätze ′ und ″ unterscheiden. Es wird daher nur das mittlere Vortriebsrohr beschrieben.

Das dargestellte Vortriebsrohr hat einen inneren Rohrabschnitt 1 in Form eines duktilen Gußrohres, das an seinem linken Ende ein übergreifendes Teil 3 für eine Verbindungsmuffe und an seinem rechten Ende ein entsprechend geformtes Teil 4 für eine Verbindungsmuffe aufweist. Wie dargestellt, steht das Teil 3 der Verbindungsmuffe in Eingriff mit dem dem Teil 4 entsprechenden Teil 4″

des benachbarten Vortriebsrohres, während das Teil 4 der Verbindungsmuffe vom Teil 3′ des rechten benachbarten Vortriebsrohres übergriffen wird und mit diesem in Eingriff steht.

Der innere Rohrabschnitt 1 ist von einem Ummantelungsabschnitt 2 umgeben, dessen maximaler Durchmesser größer ist als der maximale Durchmesser des Verbindungsmuffenteils 3, so daß der Ummantelungsabschnitt 2 eine durchgehende, glatte zylindrische Außenfläche bildet. Am in Figur 1 linken Ende erstreckt sich der Ummantelungsabschnitt 2 bis zum Ende des inneren Rohrabschnittes 1, d.h. er schließt mit dem Ende des Verbindungsmuffenteils 3 ab, während er am rechten Ende in deutlichem Abstand vom Ende des inneren Rohrabschnittes 1 endet. Dadurch ergibt sich, wie dargestellt, im montierten Zustand zwischen dem in Figur 1 jeweils rechten Ende eines Ummantelungsabschnittes und dem linken Ende des Ummantelungsabschnittes des benachbarten Vortriebsrohres ein Ringspalt 5, d.h. das rechte Ende eines Ummantelungsabschnittes 2 endet bei zum Rohrstrang verbundenen Vortriebsrohren im Abstand vom linken Ende des benachbarten Vortriebsrohres. Auf diese Weise ist sichergestellt, daß über die Ummantelungsabschnitte 2′, 2, 2″ des gebildeten Rohrstranges keine Vortriebskräfte übertragen werden können.

Wie vorstehend bereits erwähnt, können die Ummantelungsabschnitte 2, 2′, 2″ beispielsweise aus Beton geringer Festigkeit oder aus geschäumtem Kunststoff bestehen, und die Ringspalte 5 können gegebenenfalls mit einem dauerelastischen Material verfüllt werden, insbesondere wenn der Ummantelungsabschnitt 2, 2′, 2″ zur Wärmeisolierung dienen soll.

Wie dargestellt, ist die Innenwand des inneren Rohrabschnittes 1 mit einer Korrosionsschutzschicht 6 bedeckt, so daß auch aggressive Medien durch den Rohrstrang geleitet werden können.

Die zu einem Teil eines Rohrstranges zusammengesetzten Vortriebsrohre gemäß Figur 2 stimmen in ihrem Aufbau mit dem Vortriebsrohr gemäß Figur 1 überein, und gleiche Teile sind mit um jeweils 10 erhöhten Bezugszeichen bezeichnet.

Zusätzlich weist das Vortriebsrohr gemäß Figur 2 jedoch einen Mantel 17 auf, der zuvor als Schalung für die Herstellung des Ummantelungsabschnittes 12 auf dem inneren Rohrabschnitt 11 verwendet wurde. Der Mantel 17 kann beispielsweise aus PVC bestehen oder die Form eines dünnen Metallrohres haben.

## Patentansprüche

1. Vortriebsrohr zur Verlegung im Boden mittels eines Preßverfahrens, mit einem aus Metall bestehenden inneren Rohrabschnitt und einem diesen umgebenden Ummantelungsabschnitt, wobei aufeinanderfolgende Vortriebsrohre zu einem Rohrstrang zusammenfügbar sind, **dadurch gekennzeichnet, daß** der innere Rohrabschnitt (1; 11) zur Übertragung der Vortriebskraft ausgebildet ist und aus einem duktilen Gußrohr mit an den Enden einander ergänzenden Teilen (3, 4; 13, 14) einer Verbindungsmuffe besteht und daß der Ummantelungsabschnitt (2; 12) im Abstand von zumindest einem Ende des inneren Rohrabschnittes (1; 11) endet, so daß sich Ummantelungsabschnitte (2; 2'; 2''; 12, 12', 12'') benachbarter Vortriebsrohre innerhalb des Rohrstranges im Abstand voneinander befinden.

2. Vortriebsrohr nach Anspruch 1, **gekennzeichnet durch** eine druckdichte Verbindungsmuffe.

3. Vortriebsrohr nach Anspruch 1 oder 2, **dadurch gekennzeichnet, daß** der äußere Durchmesser des Ummantelungsabschnittes (2; 12) größer ist als der maximale Durchmesser der Verbindungsmuffenteile (3, 4; 13, 14).

4. Vortriebsrohr nach einem der Ansprüche 1 bis 3, **dadurch gekennzeichnet, daß** der Ummantelungsabschnitt (2; 12) aus Beton besteht.

5. Vortriebsrohr nach einem der Ansprüche 1 bis 3, **dadurch gekennzeichnet, daß** der Ummantelungsabschnitt (2; 12) aus einer Schicht aus geschäumtem Kunststoff besteht.

6. Vortriebsrohr nach Anspruch 4 oder 5, **dadurch gekennzeichnet, daß** der Ummantelungsabschnitt (2; 12) von einem eine verlorene Schalung bildenden Mantel (17) umgeben ist.

7. Vortriebsrohr nach einem der Ansprüche 1 bis 6, **dadurch gekennzeichnet, daß** die Innenfläche des inneren Rohrabschnittes (1; 11) eine Korrosionsschutzschicht (6; 16) trägt.

## Claims

1. A drive-pipe for laying in the ground by means of a pressure method, having an inner pipe portion consisting of metal and a shroud portion surrounding it, whilst successive drivepipes may be joined together into a pipe string, characterized in that the inner pipe portion (1; 11) is made for the transmission of the driving force and consists of a ductile cast iron pipe with parts (3, 4; 13, 14) at the ends which complement one another to form a connecting sleeve, and that the shroud portion (2; 12) ends at a distance from at least one end of the inner pipe portion (1; 11) so that shroud portions (2; 2'; 2''; 12, 12', 12'') of adjacent drivepipes within the pipe string lie spaced from one another.

2. A drive-pipe as in Claim 1, characterized by a pressuretight connecting sleeve.

3. A drive-pipe as in Claim 1 or 2, characterized in that the outer diameter of the shroud portion (2; 12) is larger than the maximum diameter of the parts (3, 4; 13, 14) of the connecting sleeve.

4. A drive-pipe as in one of the Claims 1 to 3, characterized in that the shroud portion (2; 12) consists of concrete.

5. A drive-pipe as in one of the Claims 1 to 3, characterized in that the shroud portion (2; 12) consists of a layer of foamed plastics.

6. A drive-pipe as in Claim 4 or 5, characterized in that the shroud portion (2; 12) is surrounded by a jacket (17) forming a lost mould.

7. A drive-pipe as in one of the Claims 1 to 6, characterized in that the inner face of the inner pipe portion (1; 11) bears a protective anti-corrosion layer (6; 16).

## Revendications

1. Tube d'enfoncement à poser dans le sol par un procédé de poussée, avec une partie tubulaire intérieure réalisée en métal et avec une partie d'enveloppe entourant cette partie intérieure, des tubes d'enfoncement successifs pouvant être réunis en une ligne de tubes, caractérisé en ce que la partie tubulaire intérieure (1; 11) est conçue pour transmettre la force d'enfoncement et est constituée d'un tube en fonte ductile avec, aux extrémités, des parties complémentaires (3,4; 13,14) d'un manchon de raccordement, et en ce que la partie d'enveloppe (2; 12) se termine à distance d'au moins une extrémité de la partie tubulaire intérieure (1; 11), de sorte que les parties d'enveloppe (2; 2'; 2''; 12,12' ,2'') de tubes d'enfoncement voisins dans la ligne de tubes se trouvent à distance les unes des autres.

2. Tube d'enfoncement selon la revendication 1, caractérisé par un manchon de raccordement étanche.

3. Tube d'enfoncement selon la revendication 1 ou 2, caractérisé en ce que le diamètre extérieur de la partie d'enveloppe (2; 12) est supérieur au diamètre maximal des parties de manchon de raccordement (3,4; 13,14).

4. Tube d'enfoncement selon l'une des revendications 1 à 3, caractérisé en ce que la partie d'enveloppe (2; 12) est réalisée en béton.

5. Tube d'enfoncement selon l'une des revendications 1 à 3, caractérisé en ce que la partie d'enveloppe (2; 12) est constituée d'une couche de matière plastique moussée.

6. Tube d'enfoncement selon la revendication 4 ou 5, caractérisé en ce que la partie d'enveloppe (2; 12) est entourée d'une gaine (17) constituant un coffrage perdu.

7. Tube d'enfoncement selon l'une des revendications 1 à 6, caractérisé en ce que la face interne de la partie tubulaire intérieure (1; 11) porte une couche anticorrosive (6; 16).

# FIG. 1

# FIG. 2